# EUROPEAN PATENT APPLICATION

(11) **EP 4 796 843 A1**
(43) Date of publication of application: **26.08.2026**
(21) Application number: 25159454.5
(22) Date of filing: 21.02.2025
(51) Int. Cl.: F24D 19/10, F24F 11/56, F24H 15/156, F24H 15/254, F24H 15/262, F24H 15/31, F24H 15/375, F24H 15/414, F24H 15/443, F24H 15/457, G05D 23/19, F24D 3/18

(54) **METHOD FOR CONTROLLING A SUPPLY FLUID TEMPERATURE OF A HEAT PUMP OF A FLOOR HEATING SYSTEM**

(71) Applicant: Uponor Innovation AB, 737 61 Virsbo (SE)
(72) Inventor: González, José Luis, 45005 Toledo (ES); Suárez, David, 28012 Madrid (ES)
(74) Representative: Li Schrag, Yue

(57) **Abstract**

The invention pertains to a computer-implemented method for automatically controlling the temperature of a heat transfer fluid supplied from a heat pump (10) to heat exchanger units (12) of a floor heating system (100) in a building, particularly a residential one. The system includes at least two independently controlled thermal control zones (20, 22) for heating and/or cooling. The method involves receiving building characteristics data (30), weather forecast data (32), predefined setpoint climate data (34), and measured climate data (36) from each thermal control zone (20, 22). The method is characterized by determining sequential weather data and climate deviation data using a processing unit. This data, along with the building characteristics data (30), is transmitted to a data-driven control unit. The control unit analyzes the input data using a trained control model, developed through a machine learning algorithm and a dataset of simulated data indicative of the building's thermal behavior and the floor heating system's (100) performance under varying weather conditions. The control unit determines an optimum supply fluid temperature, defined as the minimum temperature of the heat transfer fluid that maintains the measured climate data (36) within defined thresholds centered on the setpoint climate data. The temperature of the heat transfer fluid is then controlled based on the determined optimum supply fluid temperature.

## Description

### Technical field

The present relates to a computer-implemented method for automatically controlling a supply fluid temperature of a heat transfer fluid, which is supplied from a heat pump to heat exchanger units of a floor heating system of a building according to the preamble of claim 1.

Specifically, the present invention relates to a computer-implemented method for automatically controlling a supply fluid temperature of a heat transfer fluid, which is supplied from a heat pump to heat exchanger units of a floor heating system of a building, particularly a residential building. The floor heating system comprises at least two thermal control zones which can be controlled independently of one another for heating and/or cooling. The method involves receiving, via at least one communication interface of a computing device, building characteristics data representing structural and/or physical characteristics of the building, weather forecast data, predefined setpoint climate data of each individual thermal control zone, and measured climate data sensed by at least one sensing unit of each individual thermal control zone.

### Background and prior art

Heating, ventilation, and air conditioning (HVAC) systems are essential for maintaining comfortable and healthy indoor environments in buildings. Among these, floor heating systems are popular due to their efficiency and the comfort they provide. These systems typically consist of a network of pipes embedded in the floor, through which a heat transfer fluid, heated by a heat pump, is circulated. The heat from the fluid is then radiated upwards to heat the room.

The performance of such systems can be influenced by various factors including the structural and physical characteristics of the building, the weather conditions, and the desired indoor climate conditions. Therefore, controlling these systems to maintain optimal indoor climate conditions while ensuring energy efficiency can be a complex task.

Traditional wireless R[adio ]F[requency] underflooor heatings systems, typically set supply water temperature based on a preset heating curve linked to outdoor temperature. However, optimizing this heating curve can be complex.

To improve floor temperature consistency, system responsiveness, and energy efficiency compared to standard controls, Uponor's Smartrix system (2023) features an intelligent autobalancing function. This system calculates the energy needs of individual rooms or zones and adjusts the output of each loop based on its length. The calculation considers factors like room temperature, setpoint, and outdoor conditions. Temperature control is achieved by adjusting water flow to each room in real-time using ON/OFF or PWM control.

ON/OFF water flow control is often used in radiant heating and cooling systems. For instance, EP3709122 A1 describes adjusting temperature by regulating water flow via ON/OFF, Pulse Width Modulation (PWM), or flow diameter to match real-time temperature needs in each room. This is essentially a switch control: it activates only when the temperature goes above or below set limits, with no adjustment in between. Consequently, the heating control system responds slowly.

Many efforts have been dedicated to address optimal water supply temperature making use of meteorological parameters such as outdoor temperature and solar radiation; see for example G. Yeom, D.E. Jung, S.L. Do, Improving a heating supply water temperature control for radiant floor heating systems in korean high-rise residential buildings, Sustainability 11 (2019) 3926, https://doi.org/10.3390/su11143926; and Potocnik P., Vidrih B., Kitanovski A., Govekar E. Analysis and optimization of thermal comfort in residential buildings by means of a weather-controlled air-to-water heat pump, Build. Environ. 140 (2018) 68-79. https://doi.org/10.1016/j. buildenv.2018.05.044.

The current state of the art in radiant heating systems, particularly underfloor heating systems, has several disadvantages, in particular it does not take into account the large thermal inertia of floor heating systems compared to other terminal units, such as radiators, splits or fan-coils.

The increased use of insulation materials in buildings to meet energy efficiency regulations has made these systems less responsive due to their large thermal inertia. This is particularly problematic in climates with significant daily temperature variations, where a high supply water temperature in the early hours can lead to indoor overheating and increased energy costs.

### Disclosure of the present invention: problem, solution, advantages

Starting from the disadvantages and shortcomings as described above and taking the prior art as discussed into account, an object of the present invention is to further develop a method of the kind as described in the technical field, in such way that an efficient and precise control of the floor heating system, taking into account various factors such as building characteristics, weather conditions, and user preferences. In particular, it is an object of the present invention to increase the probability of success in avoiding overheating situations. Moreover, it is an object of the present invention provide a fast response time of the supply fluid temperature on factors such as weather changes, room temperature factors, and user preferences to prevent overheating and undercooling and improve final user comfort and energy savings in the floor heating systems.

The object of the present invention is achieved by a method comprising the features of claim 1, by a computer-implemented method comprising the features of claim 14, a floor heating system comprising the features of claim 15 and a computer program and/or a computer program product comprising the features of claim 16. Advantageous embodiments and expedient improvements of the present invention are disclosed in the respective dependent claims.

The present invention is principally based on the idea of predicting optimal heat pump water supply temperature. It integrates a machine learning algorithm, such as an Artificial Neural Network (ANN) regression, which is a technique with Artificial Intelligence (AI), into the control system for underfloor heating. This innovative machine learning control system uses weather forecast data to optimize comfort and energy savings in multi-zone underfloor heating systems, especially those using a heat pump. The data-driven control model is specifically trained for both the building and to the underfloor heating together. In particular, the present invention provides a zoned underfloor heating system control optimization based on thermal balance models and weather forecasts.

The invention provides a computer-implemented method for automatically controlling the supply fluid temperature of a heat transfer fluid supplied from a heat pump to heat exchanger units of a floor heating system. The method involves receiving building characteristics data, weather forecast data, predefined setpoint climate data for each thermal control zone, and measured climate data sensed by at least one sensing unit of each thermal control zone. The system then determines sequential weather data and climate deviation data, which are transmitted to a data-driven control unit. This unit analyzes the input data using a trained data-driven control model, which is trained using a machine learning algorithm and a dataset of simulated data indicative of the thermal behavior of the building and the performance of the floor heating system under different weather conditions. The system then determines the optimum supply fluid temperature and controls the temperature of the heat transfer fluid based on this determination. The floor heating system can further include a supply temperature control unit. Technically, the algorithm predicts the optimum supply fluid temperature and sends it as a control setpoint to the heat pump. Thus, heat pump adapts by means of the supply temperature control unit its own control to follow this control setpoint. Thus, the supply temperature control unit can be determined as a heat pump inner control unit.

The method of the present invention distinguishes from the prior art in particular in that the data-driven control model is specifically trained for both the building and for the underfloor heating together. Thermal demand of the building and the thermal response of the underfloor heating, in particular of the heat exchangers units of the underfloor heating, is considered for training the data-driven control model. This leads to the technical effect, the floor heating system can be controlled more precisely and efficiently.

This method allows for efficient and precise control of the floor heating system, taking into account various factors such as building characteristics, weather conditions, and user preferences. With other words, the method is designed to predict, adapt, and optimize the floor heating system based on weather changes, room temperature factors, and user preferences.

An key advantage of this invention is its ability to provide fast response times, keeping the building at ideal temperatures throughout different seasons. The method for automatically controlling a supply fluid temperature according to the invention is designed to predict, adapt, and optimize the floor heating system based on weather changes, room temperature factors, and user preferences.

According to a preferred embodiment of the invention, the heat pump uses electricity to provide both heating and cooling to a building. In the winter, the heat pump provides heating by extracting heat from outside a building and moving it inside. The most common type of heat pump in residential buildings is the air-to-water. However, the purposed innovative machine learning algorithm can be used with air-to-water as well as water-to-water heat pumps. The heat pump can be connected via an cloud interface to the manufacture's cloud. Moreover, it preferably has an integration A[pplication]P[rogramming]I[nterface] through which the heat pump's supply temperature (T_{supply}) can be controlled. For those heat pumps which do not have a direct connection to the cloud, an I[nternet]o[f]T[hings] gateway connected to the control terminal of the electronic board of the heat pump can be used.

This method provides an optimal energy management strategy of zoned underfloor heating control systems by analyzing data from buildings together with outdoor meteorological data. It can be used to predict energy consumption and human comfort to develop management policies with the goals of reducing energy consumption and improving final user comfort.

The control of the temperature of the heat transfer fluid supplied by the heat pump to the heat exchanger units based on the determined optimum supply fluid temperature allows increased energy savings and automatic adaption of the building comfort temperature as well as heating circuits water supply temperature based on occupancy profiles and weather forecast.

The determined optimum supply fluid temperature may address the supply temperature control by
a) dynamically adjusting its heating curve, i.e. adjusting the slope and level of the heating curve, which ultimately determines the temperature of the water supplied to the terminal; or
b) directly changing the temperature of the water supplied to the radiators or underfloor heating.

In addition, the determined optimum supply fluid temperature may address the individual zone temperature control by controlling the water flow rate of each zone via its setpoint.

In an embodiment of the method, the optimum supply fluid temperature is defined as the minimum heat pump's supply fluid temperature that maintains the average indoor temperature sensed for the individual thermal control zones within a predefined hysteresis, for example a 1°C hysteresis, centered on the average setpoint temperature of the individual thermal control zones. This approach allows for a more precise control of the indoor temperature, ensuring that it stays within a narrow range around the desired setpoint temperature. The use of a hysteresis, such as a 1°C hysteresis, provides a buffer zone around the setpoint temperature, preventing the system from constantly adjusting the supply fluid temperature in response to minor fluctuations in the indoor temperature. This can result in a more stable indoor climate and can also improve the energy efficiency of the system by reducing unnecessary adjustments to the supply fluid temperature.

In another embodiment of the method, the determination of the climate deviation data involves calculating the difference between the average setpoint indoor temperature for the individual thermal control zones and the average indoor temperature sensed for the individual thermal control zones. This calculation could be performed, for example, by weighting with the area of each individual thermal control zone. This approach allows for a more accurate representation of the overall climate deviation within the building. By taking into account the area of each individual thermal control zone, the method can more accurately reflect the impact of each zone on the overall indoor climate. This can result in a more precise control of the supply fluid temperature, leading to improved comfort and energy efficiency. Moreover, for determining the climate deviation data the minimum difference between setpoint and ambient temperature of all thermal zones can be taken into account to precise control of the supply fluid temperature.

In another embodiment of the method, the machine learning algorithm trains the control model by means of a regression analysis. Regression analysis is a statistical process for estimating the relationships among variables.

In the context of this method, the regression analysis can be used to model the relationship between the input data (including building characteristics data, sequential weather data, and climate deviation data) and the optimum supply fluid temperature. By training the control model using regression analysis, the model can learn to accurately predict the optimum supply fluid temperature based on the input data. This can result in a more accurate and efficient control of the supply fluid temperature, leading to improved comfort and energy efficiency in the building.

In another embodiment of the method, a supervised learning method, which learns from labeled datasets, where each input is paired with a correct output, is used for training the control model. In particular, the data-driven control unit may comprise a neural network and the machine learning algorithm used to train the control model may be an Artificial Neural Network regression.

Supervised learning is a type of machine learning where the model is trained on a labeled dataset, i.e., a dataset where each input is paired with the correct output. This allows the model to learn the relationship between the inputs and the outputs, and to make accurate predictions when presented with new, unseen inputs. Artificial Neural Network regression is a type of machine learning algorithm that is particularly well-suited to tasks involving complex, non-linear relationships between inputs and outputs. By using an Artificial Neural Network (ANN) regression to train the control model, the model can learn to accurately predict the optimum supply fluid temperature even in complex scenarios involving multiple interacting variables. This can result in a more accurate and efficient control of the supply fluid temperature, leading to improved comfort and energy efficiency in the building.

In this context, ANN regression refers to the application of an Artificial Neural Network (ANN) for regression tasks. This involves predicting a continuous output variable based on one or more input variables. The ANN is trained to learn the mapping between input features and the continuous target variable, optimizing its parameters to minimize prediction error. ANN regression is particularly useful when dealing with non-linear relationships that traditional regression methods may struggle to capture.

In connection herewith or alternatively therefrom, the machine learning algorithm used to train the control model can be a Random Forest (RF) regression model and/ or a Long Short-Term Memory (LSTM) model.

In another embodiment of the method, the heat pump may be an air source heat pump, for example an air-to-water heat pump or a water-to-water heat pump. The heat exchanger units may be thermal emitter units, for example underfloor heating units. The heat transfer fluid is designed to adsorb thermal energy from the heat pump and to transport this energy through at least one pipe to the heat exchanger units, the respective heat exchanger units being embedded in the floor of distinct thermal control zones of the floor heating system.

The thermal control zones may be areas or rooms of the building, wherein each thermal control zone comprises at least one thermostat unit being designed for heating and/or cooling the assigned thermal control zone.

The setpoint climate data may be defined by the user and/or a climate control unit of the floor heating system based on the desired climate conditions within a specific thermal control zone.

Setpoint climate data may comprise, for example, setpoint temperature data (Tset i) and/or setpoint humidity data (T_{set h}). The measured climate data may be sensed by the thermostat unit of the assigned thermal control zone. For example, the sensed climate data may comprise indoor temperature.

This approach allows for a more precise control of the indoor climate, taking into account the specific thermal demands of each individual thermal control zone. This can result in a more comfortable and energy-efficient indoor climate.

In another embodiment of the method, the building characteristics data may be received via at least one user interface and may comprise, for example, data on window/wall ratio, building orientation, global heat transfer coefficient, window construction type, and/or window shading level. The setpoint climate data and the measured climate data may be received via at least one application programming interface by means of at least one supply operation control unit of the floor heating system. This allows present invention to seamlessly connect with conventional heat pump models.

The weather forecast data may be received via at least one cloud interface from an external database and may comprise, for example, data on global horizontal radiation and/or outdoor dry bulb temperature. The cloud-to-cloud connectivity ensures a fast set-up of the system without complex wiring, installation, or additional hardware.

The sequential weather data may be determined by means of calculating parameters such as maximum, minimum, average, and standard deviation of the weather forecast data within a defined time period. This approach allows for a comprehensive and accurate control of the supply fluid temperature, taking into account a wide range of factors including building characteristics, user preferences, and weather conditions. This can result in a more comfortable and energy-efficient indoor climate.

In another embodiment of the method, the dataset of simulated data, such as thermal simulation data, is generated to be processed in a building energy modeling system. A building energy modeling (BEM) system is a comprehensive simulation tool used to analyze and predict the energy performance of buildings. It integrates various factors, including building geometry, construction materials, HVAC systems, and operational schedules, to provide insights into energy consumption and efficiency. Thus, BEM systems are designed to create and analyze energy models based on various inputs, including building characteristics and environmental conditions.

According to an advantageous embodiment of the present invention BEM data from real installation are integrated to the dataset of simulated data. Real installation data or real-world data provides insights into actual building performance, which can help calibrate models to reflect true operational conditions better than purely theoretical models. This approach allows for more accurate simulations and predictions of building energy performance.

The step of generating the dataset of simulated data includes advantageously using a simulation software, such as a whole building energy simulation tool or a building energy modeling software, in particular a simulation engine, such as EnergyPlus or TRNSYS, to develop a base case building model. The base case model includes defined parameters such as insulation levels, window types, and building orientation, along with a comprehensive dataset of historic weather data over a defined time period, including specific metrics such as outdoor air temperature, humidity, and solar radiation.

The step of generating the dataset of simulated data also may involve conducting at least one parametric simulation using the building characteristics data, which includes the aforementioned parameters of the base case building model, in conjunction with the historic weather data. The simulation yields a list of thermal performance metrics that quantitatively represent the thermal response of the building under various conditions.

In an embodiment of the method, the optimum supply fluid temperature for the floor heating system is predicted directly by the supervised learning method, in particular by the Artificial Neural Network (ANN) regression.

Advantageously, optimum supply fluid temperature labels, which are used to train the data-driven control model, are obtained from the dataset of simulated data,
- wherein the dataset of simulated data comprises for each individual thermal control zone an individual optimum supply fluid temperature provided by means of a simulation software,
- wherein a building optimum supply fluid temperature is calculated using the dataset of simulated data, and
- wherein the building optimum supply fluid temperature is used as label to be predicted by the supervised learning method.

By this approach, the data-driven control model is specifically trained for both, the building and the underfloor heating together.

Thus, according to a preferred embodiment of the invention, the ANN regression predicts building optimum supply fluid temperature. Each individual thermal control zone's optimum supply fluid temperature is obtained from simulated data. Their average values are used as label to be predicted by the ANN's regression.

According to a preferred embodiment each zone optimum water supply temperature is collected from a simulation software, such as E+ parametric simulations, under different working conditions. Then, some transformation functions are applied to obtain the final feature to train the AI model.

Taking into account the specific thermal demands of each individual thermal control zone, a more precise control of the supply fluid temperature is allowed.

Moreover, this approach allows the Artificial Neural Network to learn the relationship between the input data and the optimum supply fluid temperature for the entire building. By using the building optimum supply fluid temperature as the label to be predicted, the Artificial Neural Network can be trained to accurately predict this value based on the input data. This can result in a more accurate and efficient control of the supply fluid temperature, leading to improved comfort and energy efficiency in the building. This allows for a more precise control of the supply fluid temperature, taking into account the specific thermal demands of each individual thermal control zone. This can result in a more comfortable and energy-efficient indoor climate.

In another embodiment of the method, the optimum supply fluid temperature is predicted for a constant flow rate. This approach allows for a more accurate prediction of the optimum supply fluid temperature for the entire building. By considering the building optimum supply fluid temperature and assuming a constant flow rate, the method can provide a more accurate prediction of the overall optimum supply fluid temperature. This can result in a more efficient control of the supply fluid temperature, leading to improved comfort and energy efficiency in the building.

The step of generating the dataset of simulated data further may include applying a predefined statistical method, including but not limited to regression analysis and sensitivity analysis, to assess the effects of changes in the input parametric data on the resulting thermal performance metrics. For example, a Pearson correlation coefficient may be utilized to measure the strength and direction of the relationship between the input parameters and the output thermal performance data.

Finally, the step of generating the dataset of simulated data may involve updating the dataset of simulated data periodically based on ongoing feedback from real-time climate data and occupancy patterns, thereby enhancing the accuracy of the thermal response predictions for use in controlling the supply fluid temperature in the floor heating system. This approach allows for a more accurate and efficient control of the supply fluid temperature, leading to improved comfort and energy efficiency in the building.

In another embodiment of the method, the building characteristics data may comprise at least one of the following: insulation layer thickness in meters (for example, 0m; 0.01m; 0.05m; 0.10m; 0.15m), building orientation in degrees (for example, 0°; 90°; 180°; 270°), solar shading external fixed element width in meters (for example, 0.1m; 0.5m; 1m), window construction type (for example, double pane low-E Argon, double pane low-E Air, clear double pane Air), window/wall ratio in adim (for example, 0.4; 0.25; 0.1), room setpoint temperature in degrees Celsius (for example, 20.0; 21.0; 22.0; 23.0), and location (for example, Stockholm, Madrid, Frankfurt). This approach allows for a more accurate control of the supply fluid temperature, taking into account a wide range of building characteristics. By considering factors such as insulation thickness, building orientation, window construction type, and room setpoint temperature, the method can more accurately predict the optimum supply fluid temperature for the building. This can result in a more comfortable and energy-efficient indoor climate.

The invention also relates to a computer-implemented method for controlling the amount of energy supplied by a heat pump by means of a heat transfer fluid to heat exchanger units of a floor heating system of a building, in particular of a residential building. The floor heating system comprises at least two thermal control zones, which can be controlled independently of one another for heating and/or cooling. The method comprising the steps of
(a) controlling the thermal control zones independently of one another for heating and/or cooling by means of
   - individually defining and/or adjusting the setpoint climate data of each individual thermal control zone and
   - individually adjusting by means of at least one valve being assigned to each thermal control zone the operation time of the valve for controlling the flow rate of the heat transfer fluid of the respective individual thermal control zone based on the individual set-point climate data assigned to this thermal control zone and
(b) automatically controlling the supply fluid temperature for a heat transfer fluid being supplied from a heat pump according to the method for automatically controlling a supply fluid temperature as described above.
This can result in improved comfort for the users and reduced energy costs. Said valve can be designed for ON/OFF water flow control.

According to a preferred embodiment of the invention a weather-data-based control is provided for a floor heating control system, such as for Uponor's Smartrix system. This approach allows for providing optimal heating operation strategies easily applicable to a huge number of buildings based on underfloor heating systems. With this approach the communication interface of the computing device can receive data, such as the set of indoor temperature sensors provided by the floor heating control system, for example from smartrix, and weather forecast data, for example provided by third party companies, to dynamically predict the future heat demand of multi-family dwellings (MFH).

The invention also relates to a floor heating system that includes means for carrying out the method as described above. This floor heating system can include a heat pump, heat exchanger units, at least two thermal control zones that can be controlled independently of one another for heating and/or cooling, and a computing device with at least one communication interface. The computing device can be configured to receive building characteristics data, weather forecast data, predefined setpoint climate data of each individual thermal control zone, and measured climate data sensed by at least one sensing unit of each individual thermal control zone. The system can also include a processing unit for determining sequential weather data and climate deviation data, and a data-driven control unit for analyzing the input data and determining the optimum supply fluid temperature. This floor heating system can provide efficient and precise control of the indoor climate, taking into account various factors such as building characteristics, weather conditions, and user preferences.

The invention also relates to a computer program and/or a computer program product, particularly a mobile app, comprising instructions which, when executed by a computer, cause the computer to perform the method as described above. This computer program or computer program product can be stored on a non-transitory computer-readable medium and can be executed on a computing device, such as a personal computer, a server, a mobile device, or any other suitable computing device. The computer program or computer program product can include a user interface for receiving user inputs and displaying information to the user, and can communicate with various components of the floor heating system to control the supply fluid temperature based on the determined optimum supply fluid temperature. This computer program or computer program product can provide a user-friendly and convenient way for users to control the indoor climate of their building, leading to improved comfort and energy efficiency.

The invention also relates to the use of the method as described above, or the computer program or computer program product, on a mobile device such as a mobile phone or a tablet for automatically adjusting the heat pump operation of a floor heating system in real-time based on predicted optimum supply fluid temperature. This use case allows for convenient and user-friendly control of the floor heating system. By using a mobile device, users can easily adjust the settings of the floor heating system from anywhere, at any time. The real-time adjustment of the heat pump operation based on the predicted optimum supply fluid temperature ensures that the indoor climate is always maintained at a comfortable level, while also maximizing energy efficiency. This can result in improved comfort for the users and reduced energy costs.

### Brief explanation of the drawings

As already discussed above, there are several options to embody as well as to improve the teaching of the present invention in an advantageous manner. To this aim, reference is made to the claims respectively dependent on claim 1; further improvements, features and advantages of the present invention are explained below in more detail with reference to one preferred embodiment by way of example and to the accompanying drawings where
Fig. 1 schematically shows an embodiment of the floor heating system according to the invention;
Fig. 2 schematically shows a flow diagram of the computer-implemented method for automatically controlling a supply fluid temperature according to claim 1;
Fig. 3 schematically shows a data flow diagram of an embodiment of the method of Figure 2;
Fig. 4 shows a Coefficient of Performance (COP) and Primary Energy Ratio (PER) of a heat pump depending on the supply temperature;
Fig. 5 shows common heating curves of heat pumps' water supply temperature control;
Fig. 6 shows an evaluation of simulation test results of the method depicted in figure 3;
Fig. 7 schematically shows an embodiment of a building used for generating the dataset of simulated data;
Fig. 8 shows the outputs of the building energy modeling software used by the building energy modeling system of the floor heating system of Figure 1 to process the datasets of simulated data and
Fig. 9 shows the topology of the machine learning algorithm, namely the Multilayer Neural Network, used by the floor heating system depicted in figure 1.

### Exemplary way of embodying the present invention

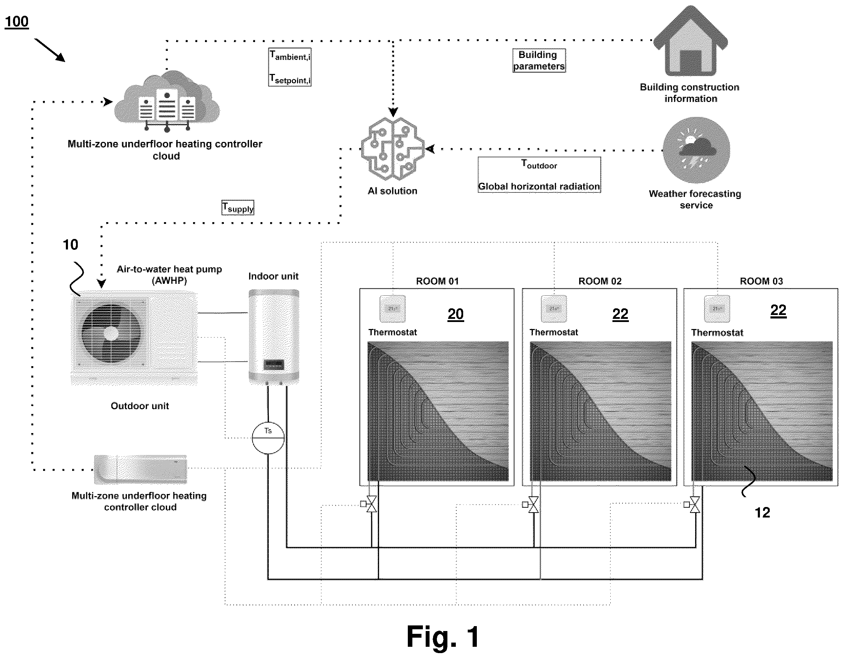

Figure 1 describes an embodiment of the present invention, namely an innovative artificial intelligence (AI) control based on weather forecast to optimize comfort and energy-saving in multi-zone underfloor heating systems (UFH) encompassing a heat pump. Specifically, Figure 1 shows a control description diagram. The innovative AI control is a serverless solution. Thus, its communication with third party component is established via cloud.

In this application, a Multi-zone underfloor heating controller is defined as any florr heating system, such as U[nder]F[loor]H[eating] controller, which can control different zones' indoor temperature individually. Each zone has thermostat that communicate temperature and humidity data to the controller. The controller adapts each zone's UFH water flow rate to its thermal demand. This control can be based on a proportional or on/off signal. However, the innovative AI control is not dependent on or affected by the type of control carried out by the controller. It just requires each zone's ambient and setpoint temperatures *(T_{ambient,í}, T_{setpoint.i})* to be processed as input.

A weather forecasting service is presently a cloud-based service which predicts how the weather will be over the following few days. Specifically, outdoor temperature (T_{outdoor}) and the global horizontal radiation (GHR) are the main weather variables considered as inputs of the purposed innovative AI solution. Moreover, other weather variables could be easily added to the artificial intelligence (AI) control.

AI solution is called presently the innovative AI control based on weather forecast to optimally control heat pump water supply temperature. This control is configured with the construction characteristic of the building to be optimized.

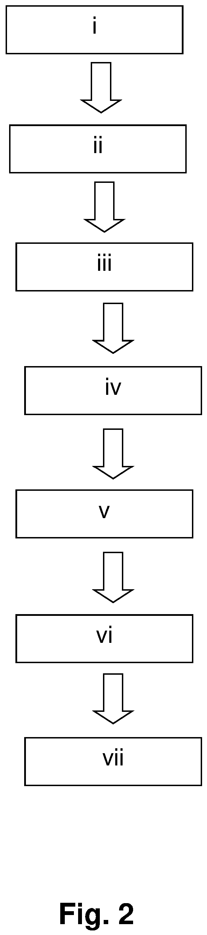

As depicted in Figure 2, the method for automatically controlling a supply fluid temperature according to the invention comprises the following steps:
(i) receiving via at least one communication interface of a computing device
   - building characteristics data 30 representing structural and/or physical characteristics of the building
   - weather forecast data 32
   - predefined setpoint climate data 34 of each individual thermal control zone 20, 22 and
   - measured climate data 36 sensed by at least one sensing unit of each individual thermal control zone 20, 22;
(ii) determining, by means of at least one processing unit (CPU) and the weather forecast data, sequential weather data that represents estimated key characteristics of the weather forecast data 32 over a specified time period, for example, a period of six to twelve hours;
(iii) determining, by means of the processing unit (CPU), the setpoint climate data 34 and the measured climate data 36, climate deviation data that represents an average deviation of the measured climate data 36 of the thermal control zones 20, 22 from the specified setpoints;
(iv) transmitting, by means of the processing unit (CPU), input data, the input data comprising the building characteristics data 30, the sequential weather data and the climate deviation data, via at least one further communication interface to a data-driven control unit (DDC);
(v) analyzing the input data by means of the data-driven control unit (DDC) using a trained data-driven control model, wherein the control model is trained using a machine learning algorithm and a dataset of simulated data indicative of the thermal behavior of the building and the performance of the floor heating system 100 under different weather conditions, for example under different global horizontal radiation rates (GHR) and/or different outdoor dry bulb temperatures (Tout), and
(vi) determining for the floor heating system 100 by means of the data-driven control unit (DDC), using the input data and the trained control model, at least one optimum supply fluid temperature, wherein the optimum supply fluid temperature is defined as the minimum temperature of the heat transfer fluid supplied by the heat pump 10 that maintains the measured climate data 36 sensed by the sensing units of the individual thermal control zones 20, 22 within defined thresholds centred on the setpoint climate data 34 and
(vii) controlling by means of at least one supply temperature control unit the temperature of the heat transfer fluid supplied by the heat pump 10 to the heat exchanger units 12 based on the determined optimum supply fluid temperature.

The control model described in step (v) is specifically trained for both the building and for the underfloor heating together.

With regard to step (vi) the objective of determining the optimum supply fluid temperature is to predict the minimum heat pump's supply fluid temperature that ensure user comfort (minimize difference between the user's setpoint and measured climate data) within a predefined threshold of for example at most +-3 °C, more specifically at most +- 2 °C, advantageously at most +- 1 °C.

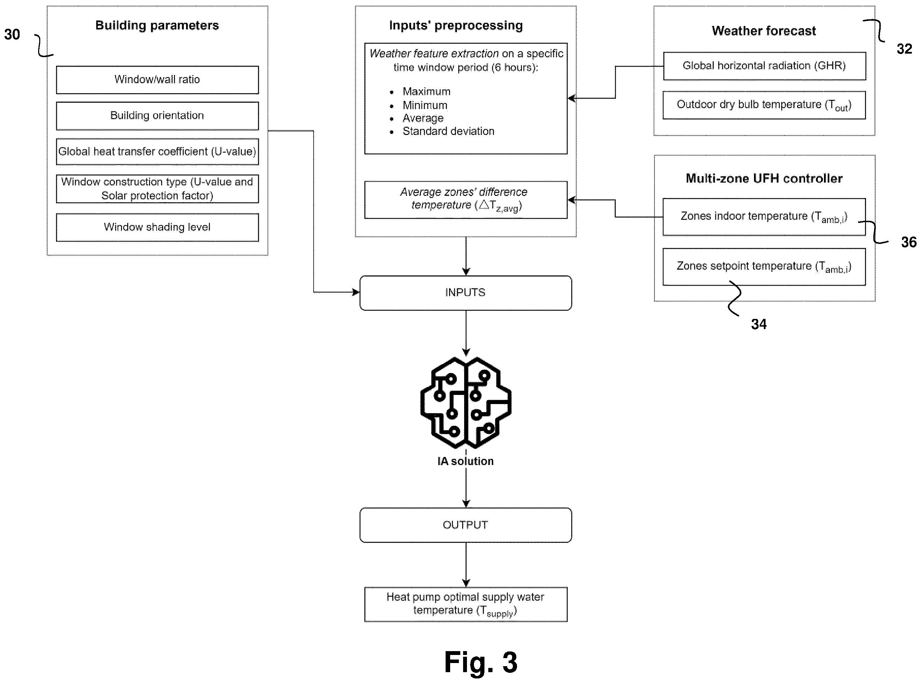

Figure 3 shows the innovative AI solution data flow diagram. As shown, weather forecast service as well as multi-zone UFH controller inputs are previously preprocessed to extract the desired characteristics. However, construction characteristics of the building are directly feed to the AI solution as inputs.

In the following the technical features of the water supply temperature control according to an embodiment of the present invention is described:
The present innovative AI solution controls the heat pump water supply temperature instead of addressing the individual zone temperature control by controlling the water flow rate of each zone via its setpoint.

The approach of controlling the heat pump water supply temperature does not overwrite zone temperature setpoint defined by the final user based on adaptive thermal comfort models.

There are dynamic thermal comfort models which show that energy efficiency can be improved while maintaining the comfort of the occupants (see Aparicio-Ruiz P. et al. Building automation system with adaptive comfort in mixed mode buildings. Sustainable Cities and Society 43, (2018) 77-85). However, in general, such adaptive comfort models require extensive longitudinal field studies, as well as the collection of individual comfort votes. It is also important to note that these adaptive comfort models take the decision making power out of the hands of the user.

In contrast, the current multi-zone UFH controller controls each zone's indoor temperature individually based on the user's setpoint definition. The advantage of this is that the current innovative AI solution does not alter user comfort, but rather predicts the optimal heat pump water flow temperature to achieve it. This prediction is based on the average building comfort level (ΔT_{z,avg}). Therefore, innovation control tends to adapt heat pump's thermal energy production to current and future building thermal demand without risking user comfort.

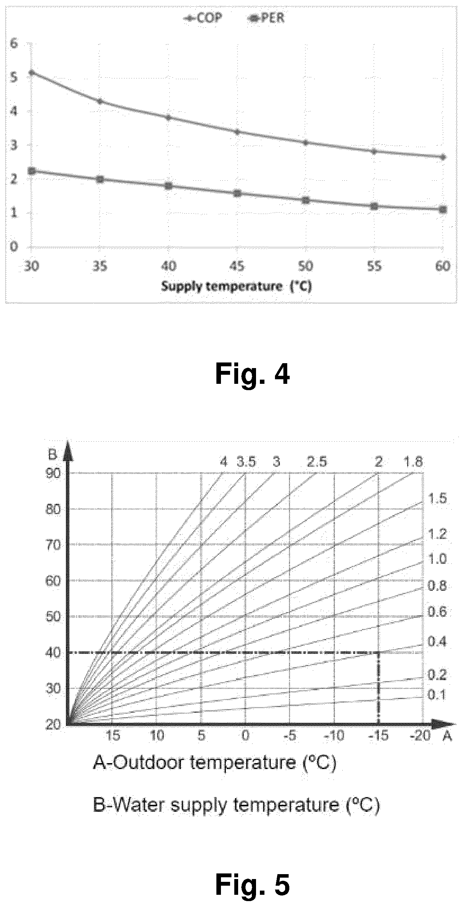

Supply water temperature control plays an important role in both, the energy-saving and the thermal comfort of the indoor climate. According to experimental results, (see Hu B., Wang R.Z., Xiao B., et al. Performance evaluation of different heating terminals used in air source heat pump system. Int. J. Refrig. 98 (2019) 274-282) showed that 1°C drop in the supply water temperature improves COP by 2%. This information can be contrasted with the documentation provided by heat pump manufacturers (see *https:*//*daikintechnicaldatahub.eu*/*en-GB*/). Figure 4 shows as technological background information, Coefficient of Performance (COP) and Primary Energy Ratio (PER) of a heat pump depending on the supply temperature for a fixed outdoor air temperature of 2°C
This supply fluid temperature control, specifically supply water temperature control, is a great advantage compared to static heating curves which are commonly used to manage heat pumps' water supply temperatures. In a conventional system controller, the supply water temperature is determined based on the pre-set heat curve depending on the actual outdoor temperature. However, this requires a complicated setting to achieve the optimal heat curve. In addition, this traditional control method does not consider the influence of solar radiation, which is easy to lead to the large fluctuation of room temperature. However, achievable energy savings depends on how far in advance building thermal demand changes are predicted. Therefore, weather forecasts with a prediction horizon window in the range from 6 to 12 h is considered. Thus, a more stable control is achieved and, consequently the risk of overheating is reduced.

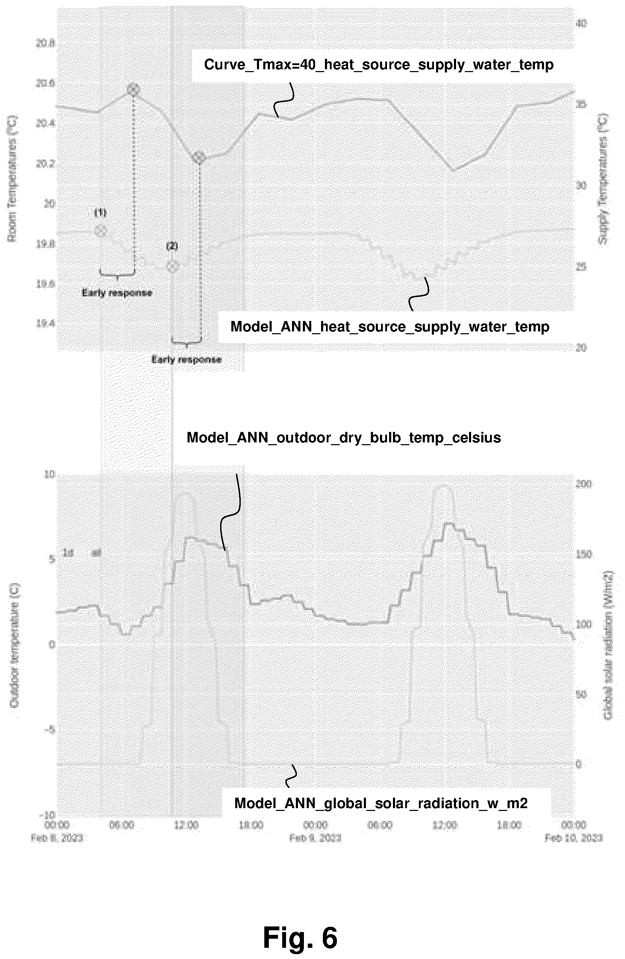

The floor heating system depicted in figure 1 uses the simulation engine EnergyPlus (see US Department of Energy, EnergyPlus Engineering Reference: The Reference to EnergyPlus Calculations, 2024) for generating the dataset of simulated data. Figure 6 shows most of the innovative control advantages, obtained through EnergyPlus building dynamics simulations. Although EnergyPlus is able to run high-fidelity simulations, it has limited capability of algorithm development and optimization. Thus, a co-operative simulation via EnergyPlus API is used to test the innovative control developed. This leads o the following advantages:
➢ An earlier water supply temperature adaptation based on both, outdoor dry bulb temperature and global solar radiation weather forecast predictions.
➢ Lower daily oscillation of the water supply temperature.
➢ More accurate control of the optimal water supply temperature.

Figure 6 shows a comparison of how standard heat pump control based on a heating curve (it relates water supply setpoint temperature with outdoor temperature) performs compared with the proposal algorithm. As the graph is based on a simulation case, outdoor conditions (outdoor temp. and global solar radiation) of both controls are equal.

The curve referenced with
**Curve_Tmax=40_heat_source_supply_water_temp** represents the heat pump's fluid supply temperature, which control is based on a static heating curve. Tmax=40 indicates that the maximum operating temperature of this static heating curve is 40°C.

The curve referenced with
**Model_ANN_heat_source_supply_water_temp** represents represents the heat pump's fluid supply temperature, which control is based on the proposed AI model.

The curve referenced with
**Model_ANN_outdoor_dry_bulb_temp_celsius,** represents the outdoor temperature sequence versus time. The model based on ANN uses this variable as an input in its prediction process to estimate the thermal behavior of the system.

The curve referenced with
**Model_ANN_global_solar_radiation_w_m2** represents the horizontal global solar radiation (W/m2) sequence versus time.

In the following it is described in more detail, how the data-driven control model is specifically trained to UFH installations.

Prior art does not show any algorithm or model specifically trained to take into account UFH's long response time caused by its large thermal inertia compared to other terminal units (radiators, splits, fan-coils...).

To train the data-driven control model specifically to UFH installations, EnergyPlus is used to build a high-quality dataset with enough samples to be able to adequately predict the water supply temperature of a UFH and a heat pump combined system.

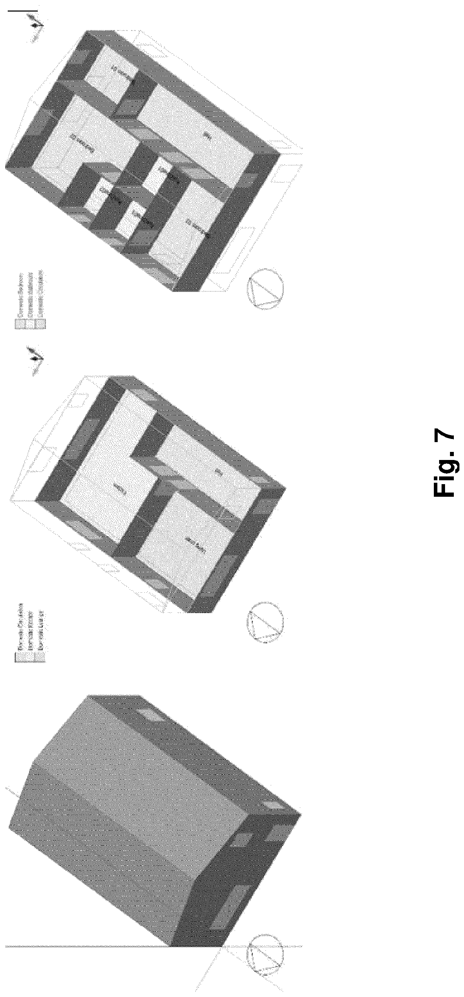

Firstly, a complete EnergyPlus simulation file where a single-family home building is perfectly linked to a multi-zone UFH model as shown in Figure 1. Figure 7 shows semi-detached single-family home building used in this study. The building model consists of two floors and 5 conditioned zones: 1) Living room, 2) Kitchen, 3) Bedroom 1, 4) Bedroom 2 and 5) Bedroom 3.

Secondly, an analysis of the state of the art regarding thermal control in buildings, with the aim of understanding which building parameters have the greatest influence on controlling indoor temperature is done.

Finally, a multi process workflow is developed to run the large number of thermal simulations with EnergyPlus.

Therefore, the dynamic response of the UFH and a heat pump combined system is evaluated under a wide range of operation conditions. Specifically, EnergyPlus calculates the optimal water supply temperature of each UFH circuit separately. As optimal value is considered the water supply temperature that lets each zone to reach user comfort levels individually. Then, average value is calculated and defined as our IA model label to be predicted. Each zone thermal demand differs from each other due to different configuration parameters which are modified in each simulation. Table 1 resumes parameters definition and values used in the parametric study. Window/wall ratio and solar shading external fixed element width are used to consider different window areas and external solar protection levels. Furthermore, insulation layer thickness and window construction type allow building configurations with different levels of thermal insulation. Finally, room setpoint temperature and different locations have been added as parameters. Thus, building model is assessed under a wider variety of weather conditions patterns. In addition, building thermal demand is clearly influenced by each room setpoint temperature definition. Therefore, a total of 5184 simulations are used to build the complete dataset.

**Table 1: Fundamental geometry of the building**

| Parameter | Units | Value |
|---|---|---|
| Insulation layer thickness | m | [0.01, 0.05, 0.10, 0.15] |
| Building orientation | deg | [0, 90, 180, 270] |
| Solar shading external fixed element width | m | [0.1, 0.5, 1] |
| Window construction type | adim | [Double pane low-E Argon, Double pane low-E Air, Clear double pane Air] |
| Window/wall ratio | adim | [0.4, 0.25, 0.1] |
| Room setpoint temperature | ° C | [20.0, 21.0, 22.0, 23.0] |
| Location | adim | [Stockholm, Madrid, Frankfurt] |

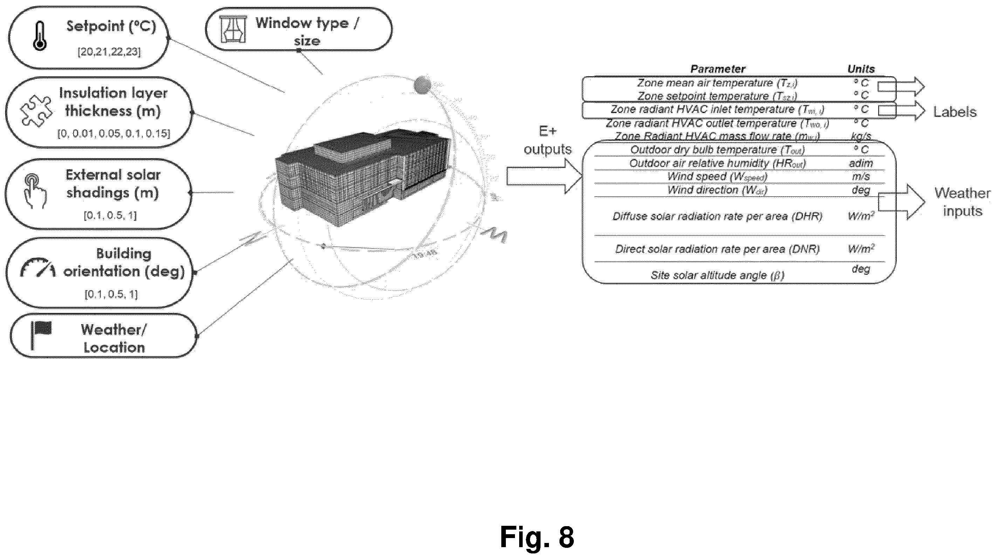

On the other hand, Figure 8 shows EnergyPlus outputs which are used to build our dataset. As shown, they match with innovative AI solution's inputs declared in Figure 3.

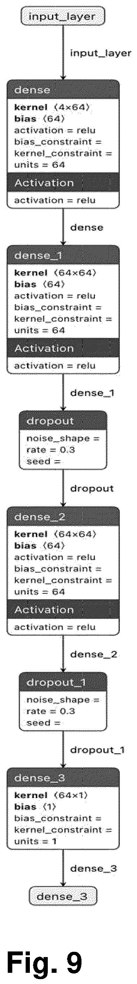

Figure 9 depicts in more detail the topology of the machine learning algorithm, namely a Multilayer Neural Network, of the method according to the present invention. Figure 9 provides details about structure and functionality of the Multilayer Neural Network.

In the following, the hyperparameter tuning process carried out to identify an advantageous performing model configuration, for example the best-performing model configuration. is described. Finally, it is presented the parameters used to train the final model, ensuring a comprehensive understanding of the approach taken to achieve optimal results.

| Layer (type) | Output Shape | Param |
|---|---|---|
| dense (Dense) | (None, 64) | 320 |
| dense_1 (Dense) | (None, 64) | 4.160 |
| dropout (Dropout) | (None, 64) | 0 |
| dense_2 (Dense) | (None, 64) | 4.160 |
| dropout_1 (Dropout) | (None, 64) | 0 |
| dense_3 (Dense) | (None, 1) | 65 |

| Layer (Type) | Output Shape | Parameters (Param) | Description |
|---|---|---|---|
| dense (Dense) | (None, 64) | 320 | First dense (fully connected) layer with 64 neurons. Typically, ReLU is used as the activation function. |
| | | | Parameters are calculated as (input size + 1) × 64, where 1 accounts for the bias term. |
| dense_1 (Dense) | (None, 64) | 4,160 | Second dense layer with 64 neurons. It receives the output of the previous layer. Parameters are (64 + 1) × 64. |
| dropout (Dropout) | (None, 64) | 0 | Dropout layer for regularization. |
| | | | Randomly disables a proportion of neurons during training to reduce the risk of overfitting. |
| dense_2 (Dense) | (None, 64) | 4,160 | Third dense layer with 64 neurons, with parameters calculated the same way as the second dense layer. |
| dropout_1 (Dropout) | (None, 64) | 0 | Second dropout layer. Like the previous one, it helps to prevent overfitting by randomly ignoring neurons during training. |
| dense_3 (Dense) | (None, 1) | 65 | Output layer with a single neuron. |
| | | | This is typically used for continuous value predictions (regression tasks). |
| | | | Parameters are (64 + 1) × 1. |

Moreover, the purpose of the network is described below:
- **Dense layers:** Provide learning capacity by modeling non-linear relationships between the input data and output.
- **Dropout layers:** Add regularization by randomly disabling neurons during training, helping to prevent overfitting.
- **Output layer:** The single output neuron is typical for regression tasks, where the network predicts continuous values.

This architecture is well-suited for tasks such as predicting numerical values in tabular datasets. It is a relatively simple but effective neural network for moderate-sized datasets.

Hyperparameter tuning is the process of selecting the best set of hyperparameters for a machine learning model to optimize its performance. This process often involves methods such as **grid search, random search,** or **Bayesian optimization** to systematically test and evaluate multiple combinations of hyperparameters. In our case we use Grid Search.

Below the hyperparameters used in the proposed AI model are listed and explained.

| Parameter | Values | Description |
|---|---|---|
| batch_size | 64, 128, 256 | Determines the number of samples processed before the model updates its internal parameters (weights). Smaller batch sizes can lead to more accurate updates but slower training, while larger ones are faster but less accurate. |
| dropout | 0.3 | Refers to the proportion of neurons that are randomly "dropped" (disabled) during training to prevent overfitting. A value of 0.3 means 30% of the neurons are ignored in each forward and backward pass. |
| layer_size | 64, 128, 256 | Indicates the number of neurons in each dense layer. Larger layer sizes increase the model's capacity to learn complex patterns but may require more computational resources. |
| learning_rate | 0.0001 | Controls the size of the steps the optimizer takes to minimize the loss function. A small learning rate ensures gradual convergence but may require more epochs. |
| loss | mse | Specifies the loss function used during training. mse (Mean Squared Error) is commonly used for regression tasks, measuring the average squared difference between predictions and true values. |
| num_epochs | 5, 15, 30 | Refers to the number of complete passes through the training dataset during training. |
| | | More epochs allow the model to learn better but may risk overfitting. |
| num_hidden_layers | 1, 2 | Indicates the number of hidden layers in the network. More hidden layers can capture more complex patterns but also increase the risk of overfitting and computational cost. |
| optimizer | adam | Specifies the optimization algorithm used to minimize the loss function. adam (Adaptive Moment Estimation) is widely used for its adaptive learning rate and computational efficiency. |

The following configuration represents an example for best-performing model obtained after conducting hyperparameter tuning. These parameters were selected based on their ability to optimize the model's performance on the validation dataset:

| Parameter | Value |
|---|---|
| batch_size | 256 |
| dropout | 0.3 |
| layer_size | 64 |
| learning_rate | 0.0001 |
| loss | mse |
| num_epochs | 30 |
| num_hidden_layers | 2 |
| optimizer | adam |

### List of reference numerals

- 10: heat pump, in particular air source heat pump, for example air-to-water heat pump or a water-to-water heat pump
- 12: heat exchanger unit, in particular thermal emitter unit, for example underfloor heating unit
- 20: first thermal control zone
- 22: further thermal control zone
- 30: building characteristics data
- 32: weather forecast data
- 34: setpoint climate data
- 36: measured climate data
- 100: floor heating system, in particular underfloor heating system
- GHR: global horizontal radiation rates
- Tₒᵤₜ: outdoor dry bulb temperatures

## Claims

1. A computer-implemented method for automatically controlling a supply fluid temperature of a heat transfer fluid, which is supplied from a heat pump (10) to heat exchanger units (12) of a floor heating system (100) of a building, in particular of a residential building, the floor heating system (100) comprising at least two thermal control zones (20, 22) which can be controlled independently of one another for heating and/or cooling, the method comprising the following steps
(i) receiving via at least one communication interface of a computing device
- building characteristics data (30) representing structural and/or physical characteristics of the building
- weather forecast data (32)
- predefined setpoint climate data (34) of each individual thermal control zone (20, 22) and
- measured climate data (36) sensed by at least one sensing unit of each individual thermal control zone (20, 22);
**characterized by**
(ii) determining, by means of at least one processing unit (CPU) and the weather forecast data, sequential weather data that represents estimated key characteristics of the weather forecast data (32) over a specified time period, for example, a period of six to twelve hours;
(iii) determining, by means of the processing unit (CPU), the setpoint climate data (34) and the measured climate data (36), climate deviation data that represents an average deviation of the measured climate data (36) of the thermal control zones (20, 22) from the specified setpoints;
(iv) transmitting, by means of the processing unit (CPU), input data, the input data comprising the building characteristics data (30), the sequential weather data and the climate deviation data, via at least one further communication interface to a data-driven control unit (DDC);
(v) analyzing the input data by means of the data-driven control unit (DDC) using a trained data-driven control model, wherein the control model is trained using a machine learning algorithm and a dataset of simulated data indicative of the thermal behavior of the building and the performance of the floor heating system (100) under different weather conditions, for example under different global horizontal radiation rates (GHR) and/or different outdoor dry bulb temperatures (Tₒᵤₜ), and
(vi) determining for the floor heating system (100) by means of the data-driven control unit (DDC), using the input data and the trained control model, at least one optimum supply fluid temperature, wherein the optimum supply fluid temperature is defined as the minimum temperature of the heat transfer fluid supplied by the heat pump (10) that maintains the measured climate data (36) sensed by the sensing units of the individual thermal control zones (20, 22) within defined thresholds centred on the setpoint climate data (34) and
(vii) controlling by means of at least one supply temperature control unit the temperature of the heat transfer fluid supplied by the heat pump (10) to the heat exchanger units (12) based on the determined optimum supply fluid temperature.

2. The method according to claim 1, **characterized in that** the optimum supply fluid temperature is defined as the minimum heat pump's supply fluid temperature that maintains the average indoor temperature sensed for the individual thermal control zones (20, 22) within a predefined hysteresis, for example a 1°C hysteresis, centered on the average setpoint temperature of the individual thermal control zones (20, 22).

3. The method according to claim 1 or 2, **characterized in that** for determining the climate deviation data, the difference between the average setpoint indoor temperature for the individual thermal control zones (20, 22) and the average indoor temperature sensed for the individual thermal control zones (20, 22) is calculated, for example by weighting with the area of each individual thermal control zone (20, 22).

4. The method according to at least one of claims 1 to 3, **characterized in that** the dataset of simulated data comprises prior measured and/ or prior calculated climate data of the thermal control zones (20, 22), said prior measured and/ or prior calculated thermal control zone climate data being measured and/ or calculated under various temperatures of said supply fluid and under
- various building characteristics and/or
- various weather data, for example measured and/or calculated and/or forecasted weather data.

5. The method according to at least one of claims 1 to 4, **characterized in that** the machine learning algorithm trains the control model by means of a regression analysis.

6. The method according to at least one of claims 1 to 5, **characterized in that** for training the control model a supervised learning method, which learns from labeled datasets, where each input is paired with a correct output, is used, in particular that the data-driven control unit (DDC) comprises a neural network and that the machine learning algorithm used to train the control model is an Artificial Neural Network (ANN) regression.

7. The method according to claims 6, **characterized in that** the optimum supply fluid temperature for the floor heating system (100) is predicted directly by the supervised learning method, in particular by the Artificial Neural Network (ANN) regression.

8. The method according to claim 7, **characterized in that** optimum supply fluid temperature labels, which are used to train the data-driven control model, are obtained from the dataset of simulated data,
- wherein the dataset of simulated data comprises for each individual thermal control zone (20, 22) an individual optimum supply fluid temperature provided by means of a simulation software,
- wherein a building optimum supply fluid temperature is calculated using the dataset of simulated data, and
- wherein the building optimum supply fluid temperature is used as label to be predicted by the supervised learning method.

9. The method according to claim 8, **characterized in that** the optimum supply fluid temperature is predicted for a constant flow rate.

10. The method according to at least one of claims 1 to 9, **characterized in that**
- the heat pump (10) is an air source heat pump, for example an air-to-water heat pump or a water-to-water heat pump, and/or
- the heat exchanger units (12) are thermal emitter units, for example underfloor heating units, and/or
- the heat transfer fluid is designed to adsorb thermal energy from the heat pump (10) and to transport this energy through at least one pipe to the heat exchanger units (12), the respective heat exchanger units (12) being embedded in the floor of distinct thermal control zones (20, 22) of the floor heating system (100), and/or
- the thermal control zones (20, 22) are areas or rooms of the building, wherein each thermal control zone comprises at least one thermostat unit being designed for heating and/or cooling the assigned thermal control zone (20, 22) and/or
- the setpoint climate data (34) are defined by the user and/or a climate control unit of the floor heating system (100) based on the desired climate conditions within a specific thermal control zone (20, 22), setpoint climate data (34) comprise, for example, setpoint temperature data (T_{set i}), and/or
- the measured climate data (36) are sensed by the thermostat unit of the assigned thermal control zone (20, 22), for example that the sensed climate data comprise indoor temperature (T_{amb. i}).

11. The method according to at least one of claims 1 to 10, **characterized in that**
- the building characteristics data (30) are received via at least one user interface and comprise, for example, data on window/wall ratio and/or building orientation and/or global heat transfer coefficient (U-value) and/or window construction type (U-value and solar protection factor) and/or window shading level, and/or
- the setpoint climate data (34) and the measured climate data (36) are received via at least one application programming interface by means of at least one supply operation control unit of the floor heating system (100) and/or
- the weather forecast data (32) are received via at least one cloud interface from an external database and comprise, for example, data on global horizontal radiation and/or (GHR) and/or outdoor dry bulb temperature (Tₒᵤₜ), and/or
- the sequential weather data are determined by means of calculating parameters as maximum, minimum, average and standard deviation of said weather forecast data (32) within a defined time period.

12. The method according to at least one of claims 1 to 11, **characterized in that** the dataset of simulated data is generated to be processed in a building energy modeling system, wherein the dataset of simulated data advantageously comprises real installation data or real world-data.

13. The method according to at least one of claims 1 to 12, **characterized in that** the building characteristics data (30) comprise at least one of
- insulation layer thickness in meters, for example 0m; 0,01m; 0,05m; 0,10m; 0,15m;
- Building orientation in degrees, for example 0°; 90°; 180°; 270°;
- Solar shading external fixed element width in meters, for example 0,1m; 0,5m; 1m;
- Window construction type, for example double pane low-E Argon, double pane low-E Air, clear double pane Air
- Window/wall ratio in adim, for example 0,4; 0,25; 0,1;
- Room setpoint temperature (T_{z set,i}) in degrees Celsius, for example 20,0; 21,0; 22,0; 23,0;
- Location, for example Stockholm, Madrid, Frankfurt.

14. A computer-implemented method for controlling the amount of energy supplied by a heat pump (10) by means of a heat transfer fluid to heat exchanger units (12) of a floor heating system (100) of a building, in particular of a residential building, the floor heating system (100) comprising at least two thermal control zones (20, 22) which can be controlled independently of one another for heating and/or cooling, the method comprising the steps of
(i) controlling the thermal control zones (20, 22) independently of one another for heating and/or cooling by means of
- individually defining and/or adjusting the setpoint climate data (34) of each individual thermal control zone (20, 22) and
- individually adjusting by means of at least one valve being assigned to each thermal control zone (20, 22) the operation time of the valve for controlling the flow rate of the heat transfer fluid of the respective individual thermal control zone (20, 22) based on the individual set-point climate data assigned to this thermal control zone (20, 22) and
(j) automatically controlling the supply fluid temperature for a heat transfer fluid being supplied from a heat pump (10) according to the method of at least one of claims 1 to 13.

15. A floor heating system (100) comprising means for carrying out the method of at least one of claims 1 to 14, in particular comprising at least one floor heating control system, being designed to manage and to optimize the heating process of the floor heating system for enhanced comfort and efficiency, wherein the floor heating control system is designed to cooperate with the supply temperature control unit.

16. A computer program and/or a computer program product, in particular a mobile app, comprising instructions which, when executed by a computer, cause the computer to perform the method of at least one of claims 1 to 15.

17. Use of a method for according to at least one of claims 1 to 14 and/or a method for according to claim 15 and/or a computer program or a computer program product according to claim 16 on a mobile device for example on a mobile phone or on a tablet for automatically adjusting the heat pump operation of a floor heating system (100) in real-time based on predicted optimum supply fluid temperature.
